# EUROPEAN PATENT SPECIFICATION

(11) **EP 3 648 616 B1**
(45) Date of publication and mention of the grant of the patent: **18.09.2024**
(21) Application number: 17916965.1
(22) Date of filing: 01.11.2017
(51) Int. Cl.: A23G 1/40, A23G 1/32, A23G 1/42, A23G 1/48

(54) **CHOCOLATE AND SIMILAR PRODUCTS SWEETENED WITH DRIED SUGAR BEET**
SCHOKOLADE UND ÄHNLICHE PRODUKTE, DIE MIT GETROCKNETEN ZUCKERRÜBEN GESÜSST SIND
CHOCOLAT ET PRODUITS SIMILAIRES SUCRÉS AVEC DE LA BETTERAVE À SUCRE SÉCHÉE

(30) Priority: 05.07.2017 TR 201709936
(43) Date of publication of application: 13.05.2020
(73) Proprietor: Eti Gida Sanayi Ve Ticaret Anonim Sirketi, Eskisehir (TR)
(72) Inventor: KANATLI, Ahmet Firuzhan, Eskisehir (TR)
(74) Representative: Sevinç, Cenk
(86) International application number: PCT/TR2017/050541
(87) International publication number: WO 2019/009831

(56) References cited:
- EP-A1- 0 962 152
- EP-B1- 0 962 152
- WO-A1-01/56397
- WO-A2-90/12117
- ES-T3- 2 230 816
- GB-A- 136 205
- GB-A- 2 287 636
- JP-A- H09 289 872
- US-A- 4 770 883
- US-A- 5 252 136
- US-A1- 2008 248 183
- US-A1- 2008 248 183

## Description

### Related Technical Field

The invention relates to products such as chocolate, compound chocolate, praline etc. without refined sugar wherein dried sugar beet with higher total sugar (sucrose, glucose and fructose), protein, fiber, vitamin and mineral quantities compared to the known crystal sugar is used, partially or completely, as sweetening agent instead of refined sugar.

### State of Art

The moisture contents of the ingredients used at chocolate is of great importance in terms of the quality, shelf life and rheological properties of the final product. In case the moisture content at the inputs is more than 3%, the rheological properties of the mixture changes, leading to extreme increase at the viscosity and causes challenges at processing or even renders processability impossible. The adverse conditions that are experienced when using the ingredients with high moisture content are as follows;
- Presence of water at the chocolate end product reduces the melting temperature of the chocolate, thus reducing the thermal resistance; and deteriorates the characteristics for dissolving in the mouth, i.e. the crystal structure and the rheological properties (viscosity, yield point),
- If the chocolate contains water, it leads to dissolving of the sucrose and recrystallization at the surface, thus has negative impact on both the physical properties (color, hardness etc.) and integrity of taste of the chocolate by inducing sugar blooming at the chocolate.

The amount of moisture at the chocolate in molten form is typically at the range of 0,5 - 1,5% (Afoakwa, 2010). Any moisture content higher than the mentioned range causes formation of a syrup layer above the sugar particles, leading to increased friction between such particles. As a consequence of this, flocculation and solidification occurs, and a dramatic increase is experienced at the viscosity (Beckett 2000).

The moisture contents of the raw materials used during chocolate production varies in the range of 0,5-3%. Although some reduction occurs at the moisture content arising from raw materials during conching process, introducing raw materials with high moisture content has negative impact on the subsequent processes (conching, tempering, molding etc.).

It is possible to input additional cacao butter or any equivalents thereof at permissible ratios in order to prevent any increase at the viscosity and to reduce the humidity ratio within the mixture; however, in this case, not only the quality properties of the product suffers significant changes, but also the energy (calorie) value of the product increases due to the change experienced at the prescription of the product.

Due to the foregoing, inputs with high water content such as sugar beet with around 70-90% water content, cannot be used for production of chocolate due to technical infeasibility. Therefore, in order to use the sugar beet in chocolate as a whole, additional methods (freeze-drying, cooking-drying, etc.) that reduce the moisture content below 3% should be implemented and should be produced as a new semi-product.

Today, essentially crystallized sucrose is produced from sugar beet both in our country and in other countries of the world. After extracting and removing majority of the sugar, refined sugar as well as molasses and beet pulp (bagasse) is obtained.

The structure of the sugar beet comprises of 4-5% cellular tissue, 4-5% chemically bonded water, and 90-95% sap. The composition of beet sap, on the other hand, comprises of 15-18% sugar (sucrose), 1,0-1,6% other non-sugar organic substances, and 0,8% inorganic salts. The dry matter contains 10.7% pectin, 5.1% cellulose, 4.6% nitrogenous matter, 7.2% mineral substances, 0.4% lipids, and 1.8% others. The sugar beet is one of the plants with highest fiber content out of all plant materials. The beet contains abundant amount of vitamins A, B, C and P; zinc, sodium, magnesium, potassium, calcium, iron, phosphorus and brome.

With increasing per diem consumption rates throughout the world each year, sugar provides a significant portion of the nutrition and energy needs of the human beings and makes people happy by fulfilling the flavor requirements. If, however, sugar, which is also naturally present in many plants, is used as an ingredient in various foodstuff, the consumers become obliged to use unnatural refined sugar subjected to many industrial processes. Although refined sugar has no direct harm to the human health in the short term, negative impacts on human health by inducing diseases such as diabetes, obesity, etc. in the long term is mentioned as can be seen from the outcomes of many researches.

In the prior art, patent application no. EP0962152A1 discloses a food quality filler product, consisting essentially from a reduction in particles of roots rich in sugar, in particular sugar beets, the composition of the particles, which is substantially homogeneous, being in percentage by weight of: 65 to 80% of sucrose, 10 to 25% of fibers vegetable, 0.5 to 1.5 fatty acids, 3 to 6% vegetable protein, 1 to 3% salt minerals and a dry matter content of at least 90%.

Patent application no. US2008/248183A1 relates to a method of producing a sugar free chocolate composition comprising the steps of: thoroughly mixing at least the following ingredients: 1 to 60% by weight agave syrup; and 25 to 99% by weight cacao liquor; so as to produce an aqueous solution; conching the aqueous solution; evaporating water from the aqueous solution utilizing an additional water removal means during the conching step to provide a conched chocolate; tempering the conched chocolate to provide a chocolate product; and forming the chocolate product.

Patent application no. US4770883A in the prior art, relates to a segmenting and dehydration process for fruits and vegetables with a primary application as a process for producing dehydrated filaments of sugar beets as a natural sweetener for use by confectioners, bakeries, breweries and other food processors. In this method; the beets are washed, shredded with a high-speed heated blade and immediately dried in a continuously sterile atmosphere that prevents bacteria contamination and growth and enzyme action which otherwise result in an unacceptably strong flavor in the finished product.

Patent application no. GB2287636A in the prior art, discloses palatable sugar beet compositions consisting essentially of sugar and non-starch polysaccharides (dietary fibre), said material comprising 40 - 80% w/w of sugar and having a malty taste. GB2287636A also relates to processes for the preparation of palatable sugar beet compositions comprising the steps of: chopping raw sugar beet to produce raw sugar beet pieces, immediately followed by blanching the diced raw sugar beet pieces in steam or hot water at a temperature of at least 87 DEG C, followed by drying the blanched sugar beet pieces.

Patent application no. WO 90/12117 A2 relates to a sugar composition consisting of from 90 to 99 % by weight sugar and from 10 to 1 % by weight of a non-gelling water-soluble dietary fibre. In WO 90/12117 A2, a novel type of soluble fibre derived from sugar beet and a method for preparing it are also disclosed. The fibre used may be a novel fibre obtainable by treating sugar beet with water free from chemical reagents at ambient pressure and at an elevated temperature, for example from 95-98°C.

Patent application no. GB136205A relates to a new food product containing cacao, especially a chocolate. This chocolate consists of a mixture of cacao and a noncaramelised concentrate of the sugar juices of beet which has been freed from unpleasant odour and flavour.

Patent application no. JPH09289872 discloses chocolate product manufactured and sold as confectionery and used for food. The chocolate product according to the present invention uses maple sugar instead of granulated sucrose or beet sugar. Maple sugar consists of crystals obtained from natural maple syrup, which is made from the sap of maple trees that grow mainly in eastern Canada and eastern United States. This product is obtained by mixing about 15-60wt.% of maple sugar and about 20-50wt.% of milk powder, adding chocolate curry, soybean lecithin and an edible fiber material such as dextrose or the like and refining the mixture with a refining device followed by kneading together at a temperature of about 50-70 deg.C for about 24-40 hours.

The patent application no. WO2001056397A1 available in the state of art mentions of a chocolate that doesn't contain refined sugar and wherein honey is used as natural sweetening agent. Said chocolate comprises honey, natural fat, natural dye or cacao, and substances such as coffee, mint, caramel as aroma.

Another patent application no. CN105076621A relates to a chocolate flavored with fruits. The contents of this chocolate comprises honey, cacao liquor, cacao butter, vanilla and substances extracted from various fruits/flowers at certain ratios.

The patents mentioned above are not directly related to the products of the invention. Although there are studies and patents intended for food products flavored with sources of sugar such as honey, fruit, etc., no food product where baked and dried sugar beet as a whole without extracting the sugar is used as a foodstuff or semi-product thereof has been encountered.

### Objective of the Invention

The primary objective of the invention is to allow offering the total sugar (sucrose, glucose and fructose) as well as other beneficial ingredients such as protein, fiber, vitamin, mineral, etc. that the sugar beet contains to human consumption within chocolate, compound chocolate, praline and similar products.

The objective of the invention is to ensure development of novel products in terms of nutritional elements and flavor by using the beet, in its natural form, within chocolate, compound chocolate, praline and similar products without extracting the sugar content of the sugar beet.

Another objective of the invention is to obtain nutritious foodstuff by using dried sugar beet in powdered form during production of chocolate, compound chocolate, praline and similar products.

Another objective of the invention is to introduce beneficial ingredients such as protein, vitamin and minerals as well as energy to the human body by using dried sugar beet in powdered form during production of chocolate, compound chocolate, praline and similar products.

Another objective of the invention is to ensure that the glycemic index is reduced when compared to the chocolate, compound chocolate and similar products containing refined sugar by using dried sugar beet in powdered form during production of chocolate, compound chocolate, praline and similar products.

Another objective of the invention is to produce a new generation of chocolate, compound chocolate, praline and similar products with further improved nutritional ingredient as the dried sugar beet used therein both feature the sweetening agent property and as it preserves many nutritional properties such as vitamin, mineral, etc.

Another objective of the invention is to allow development of new generation milk, white and bitter chocolate products partially or completely flavored with dried sugar beet (not containing refined sugar).

Another objective of the invention is to integrate the beet surpluses generated as waste during sugar beet production to the human consumption.

Another objective of the invention is to allow production of chocolate, compound chocolate, praline and similar products with distinct flavors (deodorize, caramelized, neutral, natural) using the powdered sugar beet obtained by employing different processing methods.

Another objective of the invention is to allow production of chocolate, compound chocolate, praline and similar products without refined sugar using fully dried sugar beet without employing any chemical or catalyst and any refining process.

### Detailed Description of the Invention

The invention is defined as mentioned in the claims. The production method of chocolate, praline and similar products without refined sugar is characterized by comprising below steps:
Mixing powdered cacao, powdered milk and powdered dried sugar beet as raw materials, for a period of 5±2 minutes and at 40±5°C until a homogenous mixture is achieved,
Refining the homogenous mixture first by double roller and then by quintuple roller until particle size of 10-50micrometers, preferably 15-40 micrometers is achieved, Subjecting the chocolate mixture pulverized after refining process, to conching process which is carried out for a period in the range of 4-72 hours and at a temperature rangeof 45-85°C,
Subjecting the chocolate to tempering process in order to prevent the polymorphic cacao butter content therein to form unstable crystals that leads to undesirable fat blooming, by cooling the chocolate mixture from 45-50°C to27-29°C in a controlled fashion and reheating the chocolatemixture to 30-32°C,
Filling the tempered chocolate into molds or applying coating of the chocolate on products, Cooling the chocolate filled into molds or coated on the products in the cooling tunnel at a temperature range of 10-18°C for solidifying for a period of 10-60 minutes.

The invention relates to chocolate, compound chocolate, praline and similar product wherein said product contains dried sugar beet with nutritious properties with water content reduced to 3% levels by weight at maximum allowing ease of storage, handling and use and prolonged shelf life, comprising sucrose at the rate of 70-80% by weight, glucose at the rate of 0.9-2% by weight, fructose at the rate of 1.5-3% by weight, fat at the rate of 0.05-1% by weight, protein at the rate of 3-5% by weight, soluble fiber at the rate of 0.5-2% by weight, insoluble fiber at the rate of 10-14,5% by weight, raw cellulose at the rate of 4-6% by weight, and 100-200 mg calcium, 150-250 mg magnesium, 650-750 mg potassium and 150-250 mg sodium per 100 grams as its natural content.

In an example of the invention, production of chocolate, compound chocolate, praline and similar product flavored with powdered sugar beet in dried form has been evaluated. In the chocolate, compound chocolate, praline and similar product of the invention, after pulverizing (<2mm) the dried sugar beet mentioned in the patent no. 2017/04749, it is used, partially or completely, as a sweetening agent instead of refined sugar in production of the chocolate, compound chocolate, praline and similar product.

The tables provided hereunder show the quantities of the raw material contents of the chocolate of the invention without refined sugar and a standard chocolate:

**Table 1: White chocolate**

| **Raw material** | **Quantity by weight usable in the standard chocolate (%)** | **Quantity by weight usable in the chocolate containing powdered sugar beet (%)** |
|---|---|---|
| Sugar beet powder | 0 | 5-70 |
| Cacao butter | 15-40 | 15-40 |
| Powdered milk | 20-40 | 20-40 |
| Emulsifying agent | 0,1-2 | 0,1-2 |

**Table 2: Milk chocolate**

| **Raw material** | **Quantity by weight usable in the standard chocolate (%)** | **Quantity by weight usable in the chocolate containing powdered sugar beet (%)** |
|---|---|---|
| Sugar beet powder | 0 | 5-60 |
| Cacao liquor | 5-25 | 5-25 |
| Powdered cacao | 5-35 | 5-35 |
| Cacao butter | 15-40 | 15-40 |
| Powdered milk | 5-35 | 5-35 |
| Emulsifying agent | 0,1-2 | 0,1-2 |

**Table 3: Bitter chocolate**

| **Raw material** | **Quantity by weight usable in the standard chocolate (%)** | **Quantity by weight usable in the chocolate containing powdered sugar beet (%)** |
|---|---|---|
| Sugar beet powder | 0 | 5-80 |
| Cacao liquor | 10-50 | 10-50 |
| Powdered cacao | 5-35 | 5-35 |
| Cacao butter | 5-30 | 5-30 |
| Emulsifying agent | 0,1-2 | 0,1-2 |

One of the most important advantages introduced by the chocolate, compound chocolate, praline and similar product of the invention is that there is no need for any crystal sugar or sweetening agent in its structure. The dried sugar beet that can be introduced into all kinds of food products to be sweetened allows significant reduction for the need to use crystal sugar, thus allowing healthier chocolate, compound chocolate, praline and similar products with prolonged shelf life. Optionally, however, it is possible to add crystal sugar to the respective mixture at the maximum rate of 50%.

As sugar beet perishes shortly after being harvested, which leads to low efficiency, when the unnecessary amount of free water content of the sugar beet is removed and when the beet is processed in such manner to preserve relative amount of water as required for the properties of the product (85-97% dry matter, 15-3% water), an unrefined product containing amino acid, vitamin and salts from the beet within its natural balance with caramelized or non-caramelized pleasant aromatic flavor is obtained from the sugar beet.

The chocolate without refined sugar of the invention flavored with this dried sugar beet that can be called as completely natural sugar, and the production method thereof comprises the process steps of Mixing powdered cacao, powdered milk and powdered dried sugar beet as raw materials, for a period of 5±2 minutes and at 40±5°C until a homogenous mixture is achieved,
Refining the homogenous mixture first by double roller and then by quintuple roller until particle size of 10-50micrometers, preferably 15-40 micrometers is achieved, Subjecting the chocolate mixture pulverized after refining process, to conching process which is carried out for a period in the range of 4-72 hours and at a temperature rangeof 45-85°C,
Subjecting the chocolate to tempering process in order to prevent the polymorphic cacao butter content therein to form unstable crystals that leads to undesirable fat blooming, by cooling the chocolate mixture from 45-50°C to27-29°C in a controlled fashion and reheating the chocolatemixture to 30-32°C,
Filling the tempered chocolate into molds or applying coating of the chocolate on products, Cooling the chocolate filled into molds or coated on the products in the cooling tunnel at a temperature range of 10-18°C for solidifying for a period of 10-60 minutes.

At the process step of mixing the ingredients of the chocolate flavored with dried sugar beet, which is an example for the chocolate, compound chocolate, praline and similar products of the invention; the dried ingredients (powdered cacao, powdered milk, powdered (<2 mm) dried sugar beet) used based on the structure of the chocolate and specified in the tables provided above are first subjected to preliminary mixing at 40±5_{°}C for a period of 5±2 minutes and then are kneaded into a homogenous, consistent mash as being mixed with the cacao butter. Optionally, 1/3 of the cacao butter and ½ of the emulsifying agent is mixed to all materials to be used for production.

At the process step of preliminary refining (grinding) the homogenous mixture, the premix obtained at the process step of mixing the powdered ingredients is grinded and refined first in double roller and then quintuple roller. The grinder rollers crush and reduce the size of the dried sugar beet crystals, fibrous cacao material and the solid milk particles. The particle size is reduced down to the range of 10-50 micrometers, preferably to 15-40 micrometers. The surfaces of the particles reduced in size are dampened with cacao butter or with the oil of the solid substance mixtures mentioned in the preliminary refining (grinding) process step.

In the process step of conching, the third step in the process, the chocolate mixture pulverized after the mixing and grinding phases, are transferred to homogenization and kneading machinery named conch, wherein the temperature, time and energy supplied can be controlled. At the beginning of this process, remaining 2/3 of the cacao butter is added to the mixture grinded in the previous step. In the conching process, the subsequent step after grinding process, the chocolate mixture with solid particles greatly reduced in size is further agitated and homogenized and the undesirable odor and aroma ingredients within the mixture are removed. The flavor of the chocolate is improved and its viscosity is increased by means of intense agitation during the conching process. The chocolate obtained at the conching phase is a homogenous mixture and the flavor of the chocolate is improved due to removal of the undesired aroma in the mixture. As a result of the conching process, the flavor is improved as the acids, aldehydes and ketones remaining from the fermentation products of the cacao seeds are volatilized, and the sharpness of the aroma is reduced through furthering of the oxidation of the polyphenols. The caramelisation and maillard reactions which provide a special flavor to the product during chocolate production are advanced to an optimal level. Another purpose of the conching process is to reduce the moisture content, prevent separation of the phases, and allow adjustment of the viscosity and the yield point properties.

The conching process applied in production of the chocolate prepared with dried sugar beet is carried out for a period in the range of 4-72 hours and at a temperature range of 45-85_{°}C (at 65±10°C for milk chocolate, at 50±5°C for white chocolate, and at 65±5°C for bitter chocolate) depending on the type and quality of the chocolate. During the conching process, the viscosity at 40±5°C is 10000±3000 cP, while the particle size is 15-40 micrometers.

In the process step of standardizing the homogenized liquid chocolate end product, the fourth process step after the conching process, the remaining ½ of the emulsifying agent with lubricant characteristics is added to the chocolate in this step and the conching process is maintained for another 0,5-2 hours. The quantity of the emulsifying agent to be added must be controlled delicately in order to avoid any undesirable changes at the stability of the chocolate. The viscosity and the yield point of the chocolate is adjusted with the emulsifying agents. By virtue of the emulsifying agent, the chocolate is made ready for molding and coating by adjusting its viscosity.

At the process step of tempering, on the other hand, the chocolate is adequately and carefully tempered in order to prevent unstable crystals which leads to undesired fat blooming of the polymorphic cacao butter within the chocolate as the formation of pale grey surfaces called fat blooms arises from poor or uncontrolled tempering processes.

In order to ensure formation of a stable crystal structure (core), the chocolate should be cooled from 45-50°C to 27-29°C in a controlled fashion and then reheated to 30-32_{°}C. Both cooling and heating processes should be carried out with a constant agitation rate. In this manner, the unstable β crystals will be melt, leaving only the stable β crystals in the consistent molten chocolate which will guide crystallization in the subsequent cooling phase.

In the process step of cooling the chocolate filled to the molds/coated, which is the final step of chocolate production process, the chocolate, crystal formation of which is completed, is first cast into molds at desired sizes and patterns or coated on the desired product, and then cooled in the cooling tunnel (10-18°C) for solidifying for a period of 10-60 minutes.

Then the product is packed using paper, aluminum, plastic based materials or combinations thereof that are not deleterious to the health and that would protect the properties of the chocolate, compound chocolate, praline and similar products. After packing, the tablet or coated products can be stored at 14-22°C in odorless environments with controlled humidity.

Upon consuming the chocolate, compound chocolate, praline and similar products of the invention without refined sugar and flavored with dried sugar beet, it also contributes to energy intake as provided by simple sugar as well as the protein, fiber, vitamin, and mineral intake as can be comprehended from the table provided hereunder showing the nutritional elements of the dried sugar beet.

**Table 4: Nutritional Elements of the Dried Sugar Beet**

| **Nutritional Elements within Dried Sugar Beet** | **Quantity By Weight** |
|---|---|
| Protein (%) | 3-5 |
| Fat (%) | 0,05-1 |
| Total sugar (%) | 75-85 |
| Sucrose (%) | 70-80 |
| Glucose (%) | 0, 9-2 |
| Fructose (%) | 1,5-3 |
| Total Fiber (%) | 10-15 |
| Soluble Diet Fiber (%) | 0,5-2 |
| Insoluble Diet Fiber (%) | 10-15 |
| Raw (Fiber) Cellulose (%) | 4-6 |
| Calcium (mg/100g) | 100-200 |
| Magnesium (mg/100g) | 150-250 |
| Potassium (mg/100g) | 650-750 |
| Sodium (mg/100g) | 150-250 |

As can be seen from the table above, upon consuming all kinds of food products that contain sugar but flavored with dried sugar beet instead of sugar, one should consume products that are healthier but has equivalent energy. The most important advantage offered by the invention is that healthier and more nutritious products are obtained by pulverizing dried sugar beet and using the same instead of processed sugar at all kinds of chocolate, compound chocolate, praline and similar products that contain processed sugar.

The chocolate given as an example to the chocolate, compound chocolate, praline and similar products of the invention that contains powdered dried sugar beet and produced accordingly presents superior qualities than all commercially available chocolates and diabetic/dietary chocolates. Thus, the chocolate enjoyed by individuals from all ages in the society becomes healthier. Moreover, the persons suffering from diabetes can also fulfill their appetite for sweets with the product of the invention without jeopardizing their health.

It is possible to produce foodstuff with lower moisture content by using powdered dried sugar beet at the chocolate, compound chocolate, praline and similar products as sugar equivalent, thus prolonging the shelf life of the products which are easier to store. In addition, it would be possible to offer products with lower calorie and glycemic index to the consumers thinking that unpurified products are more natural and healthy by means of chocolate, compound chocolate, praline or similar products flavored with dried sugar beet rather than chocolate, praline and similar products flavored with refined sugar.

## Claims

1. A production method of chocolate, praline and similar products without refined sugar, **characterized by** comprising below steps:
- Mixing powdered cacao, powdered milk and powdered dried sugar beet as raw materials, for a period of 5±2 minutes and at 40±5°C until a homogenous mixture is achieved,
- Refining the homogenous mixture first by double roller and then by quintuple roller until particle size of 10-50 micrometers, preferably 15-40 micrometers is achieved,
- Subjecting the chocolate mixture pulverized after refining process, to conching process which is carried out for a period in the range of 4-72 hours and at a temperature range of 45-85°C,
- Subjecting the chocolate to tempering process in order to prevent the polymorphic cacao butter content therein to form unstable crystals that leads to undesirable fat blooming, by cooling the chocolate mixture from 45-50°C to 27-29°C in a controlled fashion and reheating the chocolate mixture to 30-32°C,
- Filling the tempered chocolate into molds or applying coating of the chocolate on products,
- Cooling the chocolate filled into molds or coated on the products in the cooling tunnel at a temperature range of 10-18°C for solidifying for a period of 10-60 minutes.

2. A production method according to Claim 1, wherein the conching process is applied at 50±5oC for producing white chocolate.

3. A production method according to Claim 1, wherein the conching process is applied at 65±10oC for producing milk chocolate.

4. A production method according to Claim 1, wherein the conching process is applied at 65±5_{°}C for producing bitter chocolate.

5. A chocolate, compound chocolate, praline or similar products without refined sugar produced by the production method according to any of preceding claims, **characterized in that** said product doesn't contain any crystal sugar and comprising dried sugar beet powder with water content reduced to 3% levels by weight at maximum which is rich in nutritious properties, characteristic aromas and nutritional elements allowing ease of storage, handling, use and prolonged shelf life, which includes sucrose at the rate of 70-80% by weight glucose at the rate of 0.9-2% by weight, fructose at the rate of 1.5-3% by weight, fat at the rate of 0.05-1% by weight, protein at the rate of 3-5% by weight, soluble fiber at the rate of 0.5-2% by weight, insoluble fiber at the rate of 10-14,5% by weight, raw cellulose at the rate of 4-6% by weight, and 100-200 mg calcium, 150-250 mg magnesium, 650-750 mg potassium and 150-250 mg sodium per 100 grams as its natural content, cacao butter, emulsifying agent at the rate of 0.1-2% by weight.

6. A chocolate without refined sugar according to Claim 5, **characterized in that** the chocolate is white chocolate, milk chocolate or bitter chocolate.

7. A chocolate without refined sugar according to Claim 6, **characterized by** comprising 5-70% dried sugar beet powder, 15-40% cacao butter, 0,1-2% emulsifying agent and further comprising 20-40% powdered milk by weight, if the chocolate is white chocolate.

8. A chocolate without refined sugar according to Claim 6, **characterized in that** the chocolate comprises 5-60% dried sugar beet powder, 15-40% cacao butter, 0,1-2% emulsifying agent and further comprising 5-35% powdered milk, 5-35% powdered cacao, 5-25% cacao liquor by weight, if the chocolate is milk chocolate.

9. A chocolate without refined sugar according to Claim 6, **characterized in that** the chocolate comprises 5-80% dried sugar beet powder, 5-30% cacao butter, 0,1-2% emulsifying agent and further comprising 5-35% powdered cacao, 10-50% cacao liquor by weight, if the chocolate is bitter chocolate.

## Patentansprüche

1. Verfahren zur Herstellung von Schokolade, Pralinen und ähnlichen Produkten ohne raffinierten Zucker, **dadurch gekennzeichnet, dass** es die folgenden Schritte umfasst:
- Mischen des Kakaopulvers, des Milchpulvers und des getrockneten Zuckerrübenpulvers als Rohstoffe über einen Zeitraum von 5±2 Minuten und bei 40±5°C, bis eine homogene Mischung entstanden ist,
- Verfeinern der homogenen Mischung zunächst mit einer Doppelwalze und dann mit einer Fünffachwalze, bis eine Partikelgröße von 10-50 Mikrometern, vorzugsweise 15-40 Mikrometern, erreicht ist,
- Die nach dem Raffinationsprozess pulverisierte Schokoladenmischung wird einem Conchierprozess unterzogen, der über einen Zeitraum von 4-72 Stunden und bei einer Temperatur von 45-85°C durchgeführt wird,
- Temperierung der Schokolade, um zu verhindern, dass die darin enthaltene polymorphe Kakaobutter instabile Kristalle bildet, die zu einer unerwünschten Fettausblühung führen, indem die Schokoladenmischung kontrolliert von 45-50°C auf 27-29°C abgekühlt und wieder auf 30-32°C erwärmt wird,
- Abfüllen der temperierten Schokolade in Formen oder Auftragen des Schokoladenüberzugs auf Produkte,
- Abkühlung der in Formen eingefüllten oder auf die Produkte aufgetragenen Schokolade im Kühltunnel bei einer Temperatur von 10-18°C zur Verfestigung über einen Zeitraum von 10-60 Minuten.

2. Verfahren zur Herstellung von weißer Schokolade nach Anspruch 1, wobei der Conchierprozess bei 50±5oC durchgeführt wird, um weiße Schokolade herzustellen.

3. Verfahren zur Herstellung von Milchschokolade nach Anspruch 1, wobei der Conchierprozess bei 65±10oC durchgeführt wird.

4. Verfahren zur Herstellung von Bitterschokolade nach Anspruch 1, wobei der Conchierprozess bei 65±5°C durchgeführt wird.

5. Schokolade, zusammengesetzte Schokolade, Praline oder ähnliche Produkte ohne raffinierten Zucker, hergestellt nach dem Verfahren gemäß einem der vorhergehenden Ansprüche, **dadurch gekennzeichnet, dass** das Produkt keinen Kristallzucker enthält und getrocknetes Zuckerrübenpulver mit einem auf maximal 3 Gew.-% reduzierten Wassergehalt umfasst, das reich an nahrhaften Eigenschaften, charakteristischen Aromen und Nahrungselementen ist, die eine einfache Lagerung, Handhabung, Verwendung und verlängerte Haltbarkeit ermöglichen, und das Saccharose in einem Anteil von 70-80 Gew.-%, Glucose in einem Anteil von 0. 9-2 Gew.-%, Fructose in Höhe von 1,5-3 Gew.-%, Fett in Höhe von 0,05-1 Gew.-%, Eiweiß in Höhe von 3-5 Gew.-%, lösliche Ballaststoffe in Höhe von 0. 5-2 Gew.-%, unlösliche Ballaststoffe in Höhe von 10-14,5 Gew.-%, Rohcellulose in Höhe von 4-6 Gew.-% und 100-200 mg Calcium, 150-250 mg Magnesium, 650-750 mg Kalium und 150-250 mg Natrium pro 100 g als natürlicher Gehalt, Kakaobutter, Emulgator in Höhe von 0,1-2 Gew.-%.

6. Schokolade ohne raffinierten Zucker nach Anspruch 5, **dadurch gekennzeichnet, dass** die Schokolade weiße Schokolade, Milchschokolade oder Bitterschokolade ist.

7. Schokolade ohne raffinierten Zucker nach Anspruch 6, **dadurch gekennzeichnet, dass** sie 5 - 70 % getrocknetes Zuckerrübenpulver, 15 - 40 % Kakaobutter, 0,1 - 2 % Emulgator und ferner 20 - 40 Gew.-% Milchpulver enthält, wenn die Schokolade weiße Schokolade ist.

8. Schokolade ohne raffinierten Zucker nach Anspruch 6, **dadurch gekennzeichnet, dass** die Schokolade 5-60% getrocknetes Zuckerrübenpulver, 15-40% Kakaobutter, 0,1-2% Emulgator und weiterhin 5-35% Milchpulver, 5-35% Kakaopulver, 5-25% Kakaomasse, wenn die Schokolade Milchschokolade ist, enthält.

9. Schokolade ohne raffinierten Zucker nach Anspruch 6, **dadurch gekennzeichnet, dass** die Schokolade 5-80% getrocknetes Zuckerrübenpulver, 5-30% Kakaobutter, 0,1-2% Emulgator und weiterhin 5-35% pulverisierten Kakao, 10-50% Kakaomasse nach Gewicht, wenn die Schokolade Bitterschokolade ist, enthält.

## Revendications

1. Procédé de production de chocolat, de praliné et de produits similaires sans sucre raffiné, **caractérisé en ce qu'**il comprend les étapes suivantes:
- mélanger la poudre de cacao, la poudre de lait et la poudre de betterave sucrière séchée comme matières premières, pendant une durée de 5±2 minutes et à 40±5°C jusqu'à obtenir un mélange homogène,
- affiner le mélange homogène d'abord par double rouleau puis par quintuple rouleau jusqu'à atteindre une granulométrie de 10-50 micromètres, de préférence 15-40 micromètres,
- soumettre le mélange de chocolat pulvérisé après le processus de raffinage à un processus de conchage qui est effectué pendant une période comprise entre 4 à 72 heures et dans une plage de température allant de 45 à 85°C,
- soumettre le chocolat à un processus de tempérage afin d'éviter que le beurre de cacao polymorphe qu'il contient, ne forme des cristaux instables conduisant à une floraison indésirable de graisse, en refroidissant le mélange de chocolat de 45-50°C à 27-29°C de manière contrôlée et réchauffer le mélange chocolaté à 30-32°C,
- verser le chocolat tempéré dans des moules ou bien enrober les produits de chocolat,
- refroidir le chocolat fourré dans des moules ou enrobé sur les produits dans le tunnel de refroidissement à une température comprise entre 10 à 18°C pour une solidification pendant une période de 10 à 60 minutes.

2. Procédé de production selon la revendication 1, dans lequel le processus de conchage est appliqué à 50 ± 5°C pour produire du chocolat blanc.

3. Procédé de production selon la revendication 1, dans lequel le processus de conchage est appliqué à 65 ± 10 °C pour produire du chocolat au lait.

4. Procédé de production selon la revendication 1, dans lequel le processus de conchage est appliqué à 65 ± 5°C pour produire du chocolat amer.

5. Chocolat, chocolat composé, praliné ou produits similaires sans sucre raffiné produit par le procédé de production selon l'une quelconque des revendications précédentes, **caractérisé en ce que** ledit produit ne contient pas de sucre cristallisé et comprend de la poudre de betterave sucrière séchée à teneur en eau réduite à 3% en poids au maximum, riche en propriétés nutritives, arômes caractéristiques et éléments nutritionnels permettant une facilité de stockage, de manipulation, d'utilisation et durée de conservation prolongée, qui comprend le saccharose à raison de 70 à 80% en poids, le glucose à raison de 0,9 à 2% en poids, le fructose à raison de 1,5 à 3% en poids, les matières grasses à raison de 0,05 à 1 % en poids, protéines à raison de 3-5% en poids, fibres solubles à raison de 0,5 à 2% en poids, fibres insolubles à raison de 10 à 14,5% en poids, cellulose brute à raison de 4 à 6% en poids, et 100-200 mg de calcium, 150-250 mg de magnésium, 650-750 mg de potassium et 150-250 mg de sodium pour 100 grammes comme contenu naturel, beurre de cacao, agent émulsifiant à raison de 0,1 à 2% en poids.

6. Chocolat sans sucre raffiné selon la revendication 5, **caractérisé en ce que** le chocolat est du chocolat blanc, du chocolat au lait ou du chocolat amer.

7. Chocolat sans sucre raffiné selon la revendication 6, **caractérisé en ce qu'**il comprend 5 à 70% de poudre de betterave sucrière séchée, 15 à 40% de beurre de cacao, 0,1 à 2% d'agent émulsifiant et comprend en outre 20 à 40% de lait en poudre en poids, si le chocolat est du chocolat blanc.

8. Chocolat sans sucre raffiné selon la revendication 6, **caractérisé en ce que** le chocolat comprend 5 à 60% de poudre de betterave sucrière séchée, 15 à 40% de beurre de cacao, 0,1 à 2% d'agent émulsifiant et comprenant en outre 5 à 35% de lait en poudre, 5 à 35% de cacao en poudre, 5 à 25% de liqueur de cacao en poids, si le chocolat est du chocolat au lait.

9. Chocolat sans sucre raffiné selon la revendication 6, **caractérisé en ce que** le chocolat comprend 5 à 80% de poudre de betterave sucrière séchée, 5 à 30% de beurre de cacao, 0,1 à 2% d'agent émulsifiant et comprend en outre 5 à 35% de cacao en poudre, 10 à 50% de liqueur de cacao en poids, si le chocolat est du chocolat amer.
